# EUROPÄISCHE PATENTSCHRIFT

(11) **EP 2 035 753 B1**
(45) Veröffentlichungstag und Bekanntmachung des Hinweises auf die Patenterteilung: **28.12.2011**
(21) Anmeldenummer: 07730279.2
(22) Anmeldetag: 20.06.2007
(51) Int. Cl.: F24D 11/02

(54) **HEIZANLAGE UND VERFAHREN ZUM BETREIBEN EINER SOLCHEN HEIZANLAGE**
HEATING SYSTEM AND METHOD FOR OPERATING THE SAME
INSTALLATION DE CHAUFFAGE ET SON PROCÉDÉ DE FONCTIONNEMENT

(30) Priorität: 21.06.2006 DE 102006028521
(43) Veröffentlichungstag der Anmeldung: 18.03.2009
(73) Patentinhaber: IFF Kollmannsberger KG, 84028 Landshut (DE)
(72) Erfinder: BECKER, Patrick, 89551 Königsbronn (DE); KOLLMANNSBERGER, Johann, 84144 Geisenhausen (DE)
(74) Vertreter: Wilhelms · Kilian & Partner Patentanwälte
(86) Internationale Anmeldenummer: PCT/EP2007/056158
(87) Internationale Veröffentlichungsnummer: WO 2007/147856

(56) Entgegenhaltungen:
- DE-A1- 3 011 840
- DE-A1- 10 102 041
- DE-A1- 19 714 679
- FR-A1- 2 505 990

## Beschreibung

Die Erfindung bezieht sich auf eine Heizanlage der im Oberbegriff von Patentanspruch 1 genannten Art. Weiter bezieht sich die Erfindung auf ein Verfahren zum Betreiben einer solchen Heizanlage.

In Zeiten knapper werdender fossiler Brennstoffe und steigender Preise für diese rücken alternative Wärmequellen als Heizmöglichkeiten immer mehr in den Vordergrund. Als alternative Wärmequellen werden in steigendem Maße Sonnenkollektoren in Kombination mit Wärmepumpen verwendet. Bei Solaranlagen als Wärmequelle werden meistens Solarkollektoren verwendet, die die in einem Kreislauf durch ein Wärmeträgermittel gewonnene Energie, entweder direkt, oder indirekt über eine Wärmepumpe, den Verbrauchern zur Verfügung stellen. In Abhängigkeit von der Sonneneinstrahlung auf den Sonnenkollektor wird das Wärmeträgermittel in einer optimalen Geschwindigkeit durch den Sonnenkollektor gepumpt. Reicht die durch den Sonnenkollektor gewonnene Energie nicht aus, die Verbraucher direkt zu versorgen, liefert eine Wärmepumpe, die Energie aus einem Wärmespeicher, wie zum Bespiel einem Erdflächenspeicher, Erdsondenspeicher oder Ähnlichem, zieht, die restliche fehlende Wärmemenge. Die Wärmepumpe entzieht einem Wärmeträgermittel, das durch einen Wärmespeicher und die Primärseite der Wärmepumpe gepumpt wird, Energie und stellt sie den Verbrauchern in Form von Wärme auf höherer Temperatur zur Verfügung. Für einen optimalen Betrieb der Wärmepumpe wird die Temperaturdifferenzwischen Eingang und Ausgang der Primärseite der Wärmepumpe nicht sehr gespreizt, was zur Folge hat, dass die Wärmepumpe an der Primärseite einen hohen Durchsatz benötigt, der in der Regel unterschiedlich zu dem durch den Sonnenkollektor ist. Die Problematik der unterschiedlichen Durchsätze in den einzelnen Kreisläufen wird, gemäß DE 10102041 A, aus der eine Heizanlage gemäß Oberbegriff des Anspruches 1 bekannt ist, in der Weise gelöst, dass zwischen den beiden Kreisläufen eine hydraulische Weiche installiert wird, die die beiden Kreisläufe so kombiniert, dass in ihnen ein optimaler Durchfluss bezüglich ihrer Wärmequelle herrscht. Wird eine Heizanlage in dieser bekannten Form verbaut, kommt es in einem Fall, in dem die Kapazitäten der dort genannten Kurzzeitspeicher erreicht sind und die gewonnene Energie des Kollektors nicht mehr in den Wärmepumpenkreislauf beigemischt werden kann, weil eine kritische Temperatur für die Wärmepumpe nicht überschritten werden darf, zu einem Verlust an gewonnener Energie. Bei der bekannten Heizanlage kann der Sonnenkollektor zwar immer in seinem optimalen Arbeitspunkt arbeiten, aber in einem Fall, in dem die genannten Kurzzeitspeicher voll geladen sind und der Wärmespeicher

(Erdflächenspeicher oder Bohrung) auch seine Kapazität erreicht hat und die Wärmepumpe nicht betrieben wird, kann die gewonnene Energie nicht mehr genutzt oder gespeichert werden. Bei der bekannten Anlage kann der Erdspeicher, in welcher Form auch immer, in Zeiten, in denen der Einsatz der Wärmepumpe nicht benötigt wird, die gewonnene Energie speichern und im Bedarfsfall wieder frei geben. Die Speichermöglichkeiten eines solchen Erdspeichers sind aber sehr begrenzt. Die maximale Speichertemperatur liegt bei ungefähr 50 Grad Celsius und es ist bei dieser Art von Speichern bei dieser Temperatur mit großen Verlusten zu rechnen. Außerdem sind die Erweiterungsmöglichkeiten des Erdspeichers naturgemäß begrenzt. Eine Erweiterung des Erdspeichers wäre nur mit großem Aufwand durch weiteres Aufreißen des Erdbodens möglich. In einer Situation, in der der Benutzer die Heizanlage um weitere Wärmequellen ergänzen möchte, z.B. eine Lüftungswärmepumpe oder eine Schwimmbad-Luftentfeuchtung, die auch einen Beitrag zur Unterstützung der Wärmepumpe leisten sollen, weil sie alleine nicht in der Lage wären, die Warmwasserbereitung oder die Gebäudeheizung direkt zu versorgen, kann die weitere Wärmequelle nicht in den bekannten Aufbau der Heizanlage integriert werden.

Bei den bekannten Betriebsweisen einer solchen Anlage wird die Ebene mit der niedrigsten Temperatur zuerst mit Wärme versorgt und dann zur nächsten Ebene übergegangen, bis alle Ebenen mit Wärme versorgt sind. In der aus DE 10102041 A bekannten Anlage würde das in einem Fall, in dem die Temperatur unterhalb der Temperatur für eine Direktversorgung der Verbraucher und oberhalb der des Erdspeichers liegt, zu einer Versorgung der Primärseite der Wärmepumpe führen. Das Wärmeträgermittel des Sonnenkollektorkreislaufes würde in dem Betriebszustand dem Kreislauf der Wärmepumpe beigemischt werden und zwingend durch den Erdspeicher laufen, bevor es wieder in den Sonnenkollektorkreislauf gelangen würde. Die Rücklauftemperatur würde durch das zwingende Durchlaufen des Erdspeichers herabgesetzt werden. Aus diesem Grund würde es bei der bekannten Anlage lange dauern, bis der Kollektor eine Temperatur erreicht, bei der die nächst höhere Ebene versorgt werden kann, weil der Kollektor ein niedrigeres Temperaturniveau aufheizen muss, als eigentlich notwendig wäre.

Das hat unter Umständen die Folge, dass der Kollektor die Wärmepumpe bei der Bereitung von Warmwasser unterstützt, obwohl er alleine in der Lage wäre, die Warmwasserbereitung zu übernehmen.

Aufgabe der Erfindung ist es, einer Heizanlage gemäß Oberbegriff des Patentanspruches 1 derart zu verbessern, dass an der Primärseite der Wärmepumpe eine optimale Temperatur vorliegt.

Diese Aufgabe wird erfindungsgemäß mit einer Heizanlage mit den Merkmalen des Anspruchs 1 gelöst.

Der Kreislauf des Sonnenkollektors durchläuft einen Vorwärmspeicher zweckmäßigerweise über einen Wärmetauscher, wodurch die im Sonnenkollektor gewonnene Energie in dem Vorwärmspeicher gespeichert wird. Der Vorwärmspeicher ist weiterhin über zwei Anschlüsse mit einem Wärmespeicher an der primären Seite der Wärmepumpe angeschlossen. Der Vorwärmspeicher und der Wärmespeicher liegen in diesem Kreislauf parallel an der Primärseite der Wärmepumpe und sind in dem Vorlauf der Wärmepumpe über ein Mischventil in jedem Verhältnis kombinierbar. Hierdurch kann ein optimales Temperaturniveau für die Primärseite der Wärmepumpe erreicht werden. Mit der variablen Größe des Vorwärmspeichers, einer möglichen variablen Anzahl von Anschlüssen und der Art der Ausführung des Vorwärmspeichers können eine Vielzahl von Wärmequellen zur Unterstützung der Wärmepumpe an den Vorwärmspeicher angeschlossen und ein sehr hoher Betrag an Energie gespeichert werden. Die Kapazität des Vorwärmspeichers kann durch einen Einsatz eines Latentwärmespeichers um das Vier- bis Fünffache erweitert werden. Ein weiterer Vorteil eines Einsatzes eines solchen Vorwärmspeichers liegt darin, dass auch unter ungünstigen Verhältnissen eine Entstehung einer Eisschicht um den Wärmespeicher der Wärmepumpe verhindert und die Entstehung eines Permafrostbodens vermieden wird. Durch die Tatsache, dass der Kreislauf des Sonnenkollektors und der Wärmepumpe voneinander getrennt sind, wird es ermöglicht in beiden Kreisläufen verschiedene Wärmeträgermittel, entsprechend ihren Einsatztemperaturen, zu verwenden. Darüber hinaus können bei getrennten Kreisläufen Wartungsarbeiten an einem Kreislauf vorgenommen werden, ohne den anderen Kreislauf mit abzustellen.

Für ein optimales Temperaturniveau an der Primärseite der Wärmepumpe muss kein Vorwärmspeicher zwischen dem Sonnenkollektor und der Primärseite der Wärmepumpe installiert sein. Der Sonnenkollektor kann direkt über das Mischventil mit dem Wärmespeicher in den Kreislauf der Primärseite der Wärmepumpe eingebunden sein. Auch in diesem Fall sind der Sonnenkollektor und der Wärmespeicher parallel in diesen Kreislauf eingebunden, wobei der Vorlauf der Wärmepumpe wiederum auf ein optimales Temperaturniveau mischbar ist.

Vorteilhafte Weiterbildungen der Erfindung sind Gegenstand der Unteransprüche.

Verfahren zum Betreiben einer Heizanlage nach einem der Ansprüchen 1 bis 8 sind Gegenstände von Anspruch 10 und 11.

Nachstehend werden Ausführungsbeispiele der Erfindung anhand der beigefügten Zeichnungen erläutert.
Fig. 1 zeigt eine erste Ausführungsform der erfindungsgemäßen Heizanlage.
Fig. 2 zeigt eine zweite Ausführungsform der erfindungsgemäßen Heizanlage unter Verwendung eines Dreiwege-Mischventils.
Fig. 3 zeigt die Ausführungsform der erfindungsgemäßen Heizanlage aus Fig. 2 unter Verwendung von vorteilhaften Wärmespeichern für wärmere Länder.
Fig. 4 zeigt die Ausführungsform der erfindungsgemäßen Heizanlage aus Fig. 1 mit einer speziellen Verschaltung der Wärmequelle und unter Verwendung eines Vierwege-Mischventils.
Fig. 5 zeigt die Ausführungsform der erfindungsgemäßen Heizanlage aus Fig. 2 mit einer speziellen Verschaltung der Wärmequelle und unter Verwendung eines Dreiwege-Mischventils.

Und Fig. 6 zeigt eine weitere Ausführungsform der erfindungsgemäßen Heizanlage unter Verwendung eines zusätzlichen Vorwärmspeichers.

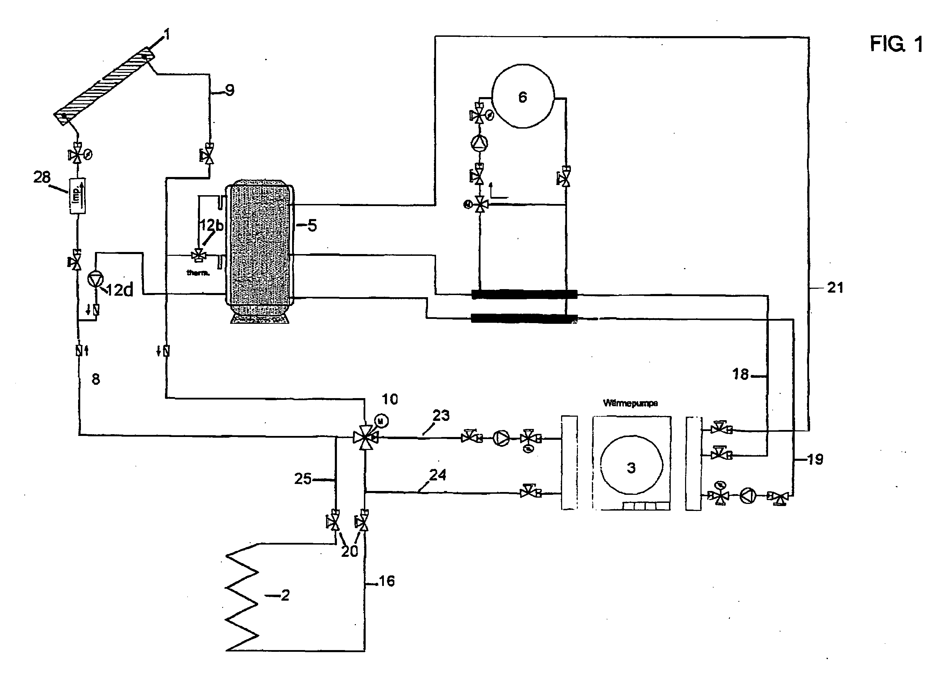

Fig. 1 zeigt eine bevorzugte Ausführungsform der erfindungsgemäßen Heizanlage, in der eine Wärmequelle 1, vorzugsweise ein Sonnenkollektor, über einen Vorlauf 9 und einen Rücklauf 8 mit einem Pufferspeicher 5 verbunden ist. Dieser Pufferspeicher 5 kann vorzugsweise ein Doppelmantelspeicher sein, der Energie für einen Verbraucher 6, zum Beispiel eine Fußbodenheizung, zur Verfügung stellt. Dieser Pufferspeicher 5 kann nicht nur zu Heizzwecken, sondern auch zur Bereitstellung von Warmwasser verwendet werden. Die Bereitung von Warmwasser wird entweder direkt durch Flüssigkeitsentnahme und Zuführung von Frischwasser oder indirekt durch Wärmeentnahme mittels Wärmetauschern bewerkstelligt. In dieser Heizanlage kann der Verbraucher 6 auch durch eine Wärmepumpe 3 über ihre Sekundärseite mit Energie versorgt werden, wobei weiterhin der Pufferspeicher 5 ebenfalls mit der Sekundärseite der Wärmepumpe 3 verbunden ist. Mit dieser in Fig. 1 gezeigten Verschaltung kann die Wärmepumpe 3 schonend betrieben werden, weil die Wärmepumpe 3 bei einem kurzen Nichtbedarf an Energie des Verbrauchers 6 nicht abgeschaltet werden muss, sondern den Pufferspeicher 5 mit Energie laden kann.

Das in dem Pufferspeicher 5 befindliche Wärmeträgermittel, das in dem Kreislauf der Wärmepumpe 3, des Verbrauchers 6 und des Pufferspeichers 5 zirkuliert, wird von dem Wärmeträgermittel, das durch den Sonnenkollektor 1 gepumpt wird, umspült, womit der Pufferspeicher 5 ebenfalls mit Energie geladen wird. Der Fall, in dem der Pufferspeicher 5 direkt von dem Sonnenkollektor 1 geladen wird, tritt ein, wenn die Einstrahlung auf den Sonnenkollektor 1 groß ist und somit das Temperaturniveau des durch den Sonnenkollektor 1 zirkulierenden Wärmeträgermittels auf einem direkt nutzbaren Niveau liegt.

Sinkt das Temperaturniveau des Wärmeträgermittels durch den Sonnenkollektor 1 bei niedrigerer Einstrahlung auf ein nicht direkt verwendbares Niveau, wird der Pufferspeicher 5 durch Schließen eines Ventils 12b und/oder durch Abschalten einer Pumpe 12d nicht mehr direkt durch den Sonnenkollektor 1 geladen. In diesem Fall wird die Versorgung eines Verbrauchers 6 mit Energie durch die Wärmepumpe 3 gewährleistet. Die Wärmepumpe 3 entzieht hierfür einem Wärmespeicher 2, der ein Erdspeicher, ein Luftabsorber, ein Schwimmbadabsorber oder eine Bohrung sein kann, Wärme über ihre Primärseite und stellt diese Wärme über ihre Sekundärseite dem Verbraucher 6 auf einem höheren Temperaturniveau zur Verfügung. Wärmepumpen arbeiten üblicherweise bei primärseitigen Temperaturen bis zu 10 bis 12°C, da bei höheren Temperaturen Hochdruckstörungen auftreten können. Für das Erreichen eines optimalen Arbeitspunktes der Wärmepumpe 3 sind, wie in Fig. 1 gezeigt, der Wärmespeicher 2 und der Sonnenkollektor 1 parallel zueinander mit der Primärseite der Wärmepumpe verbunden. Hierfür sind der Vorlauf 9 des Sonnenkollektors 1, der Vorlauf 23 der Wärmepumpe 3, der Rücklauf 24 der Wärmepumpe 3 zusammen mit dem Rücklauf 16 des Wärmespeichers 2 und der Vorlauf 25 des Wärmespeichers 2 zusammen mit dem Rücklauf 8 des Sonnenkollektors 1 über ein Vierwege-Mischventil 10 verbunden. In Zeiten schwacher Einstrahlung auf den Sonnenkollektor 1, in denen ein Temperaturniveau in dem Vorlauf 9 für eine direkte Nutzung nicht erreicht werden kann, kann, wie aus Fig. 1 ersichtlich, der Vorlauf 9 des Sonnenkollektors mit dem Vorlauf 25 des Wärmespeichers 2 für den Vorlauf 23 der Wärmepumpe 3 gemischt werden. Die gleiche Menge Wärmeträgermittel, die über das Mischventil 10 aus dem Vorlauf 9 zugemischt wird, läuft aus dem Vorlauf 25 des Wärmespeichers 2 nicht in Richtung des Mischventiles 10, sondern in den Rücklauf 8 des Sonnenkollektors. Hierdurch kann ein optimales Temperaturniveau für die Wärmepumpe 3 erreicht werden. Durch die hohe Wassermenge im Primärkreis der Wärmepumpe 3 und die geringe Spreizung wird jetzt durch die hohe Rücklauftemperatur, die sich bei ganzer oder teilweiser Solarnutzung ergibt, der Wärmespeicher 2 im laufenden Betrieb regeneriert. Ein Einfrieren wird zuverlässig verhindert. Folglich kann der Speicher 2 wesentlich kleiner als bei bekannten Anlagen ausgeführt werden. Liefert der Sonnenkollektor 1 alleine das für einen optimalen Betrieb der Wärmepumpe 3 benötigte Temperaturniveau, kann die Wärmepumpe 3 über den Vorlauf 9, das Mischventil 10 und den Vorlauf 23 der Wärmepumpe 3 mit Energie versorgt werden und das Wärmeträgermittel kann über den Rücklauf 24 der Wärmepumpe 3, das Mischventil 10 und den Rücklauf 8 des Sonnenkollektors 1 zu dem Sonnenkollektor 1 zurücktransportiert werden. In diesem Fall durchläuft das Wärmeträgermittel den Wärmespeicher 2 nicht und die Wärmepumpe 3 wird ausschließlich von dem Sonnenkollektor mit Wärme versorgt.

Wird die Wärmepumpe 3 für die Versorgung des Verbrauchers 6 oder zur Ladung des Speichers 5 nicht benötigt, kann die von dem Sonnenkollektor 1 gelieferte Energie über den Vorlauf 9, das Vierwege-Mischventil 10, den Vorlauf 23, den Rücklauf 24, wobei die Wärmepumpe 3 dem Wärmeträgermittel keine Wärme entzieht, und den Rücklauf 16 des Wärmespeichers 2 in dem Wärmespeicher 2 gespeichert werden. Im umgekehrten Fall, in dem der Verbraucher 6 Energie von der Wärmepumpe 3 benötigt und keine Sonneneinstrahlung auf dem Sonnenkollektor 1 vorliegt, kann die Wärmepumpe 3 über den Vorlauf 25, das Vierwege-Mischventil 10 und den Vorlauf 23 dem Wärmespeicher 2 Wärme entziehen und über den Rücklauf 24 und den Rücklauf 16 dem Wärmespeicher 2 das Wärmeträgermittel wieder zuführen. Durch diese Verschaltung können wie oben erklärt, der Sonnenkollektor 1 und der Wärmespeicher 2 in Kombination oder einzeln mit der Wärmepumpe 3 zusammen betrieben werden, was die Vorteile mit sich bringt, dass das Temperaturniveau für die Wärmepumpe 3 immer optimal ist und Wartungsarbeiten an dem aus dem Kreislauf genommenen Sonnenkollektor 1 oder Wärmespeicher 2 durchgeführt werden können, während die Wärmepumpe betrieben wird. Der Sonnenkollektor 1 kann, wie oben erklärt, mittels des Vierwege-Mischventils 10 aus dem Kreislauf genommen werden, während die Trennung des Wärmespeichers 2 über zwei Ventile 20 bewerkstelligt wird.

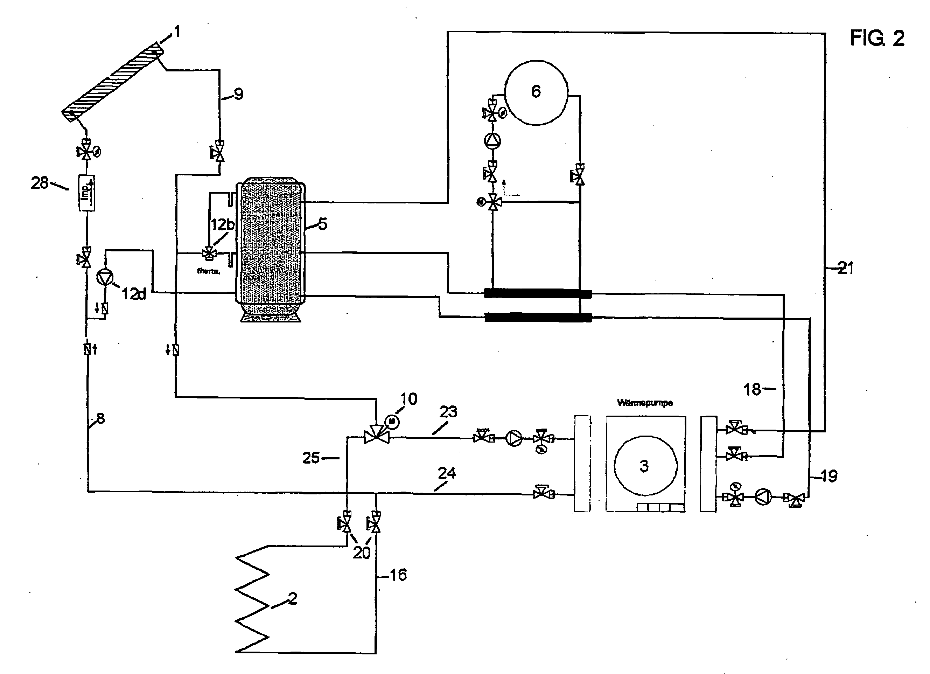

Fig. 2 zeigt eine zweite bevorzugte Ausführungsform der erfindungsgemäßen Heizanlage, wobei gleiche Elemente wie in Fig. 1 mit den gleichen Bezugszeichen versehen sind, und nicht wieder beschrieben werden. Unterschied zu Fig. 1 ist, dass ein Dreiwege-Mischventil 10, an das der Vorlauf 25 des Wärmespeichers 2, der Vorlauf 9 des Sonnenkollektors 1 und der Vorlauf 23 der Wärmepumpe 3 angeschlossen sind, anstatt einem Vierwege-Mischventil zum Einsatz kommt. In dieser Ausführungsform kann die Primärseite der Wärmepumpe 3 ebenfalls von dem Sonnenkollektor 1, dem Wärmespeicher 2 oder einer Kombination aus beiden, das heißt einem Gemisch des Vorlaufes 9 des Sonnenkollektors 1 und des Vorlaufes 25 des Wärmespeichers 2, mit Energie versorgt werden. Unterschiedlich ist auch, dass bei einer ausschließlichen Versorgung der Wärmepumpe 3 mit Wärme durch den Sonnenkollektor 1, das Wärmeträgermittel durch den Vorlauf 9, das Mischventil 10 und den Vorlauf 23 der Wärmepumpe 3 zugeführt und durch den Rücklauf 24 und den Rücklauf 8 zu dem Sonnenkollektor zurücktransportiert wird. Ein weiterer Unterschied in dem Betrieb der Heizanlage der zweiten Ausführungsform gegenüber der Ausführungsform in Fig. 1 ist, dass bei einem Stillstand der Wärmepumpe 3 der Wärmespeicher 2 über seinen Vorlauf 25 geladen und das Wärmeträgermittel durch den Rücklauf 16 dem Rücklauf 8 des Sonnenkollektors 1 wieder zugeführt wird. Die Funktionsweise der Heizanlage der zweiten Ausführungsform ist ansonsten mit der der ersten Ausführungsform aus Fig. 1 identisch.

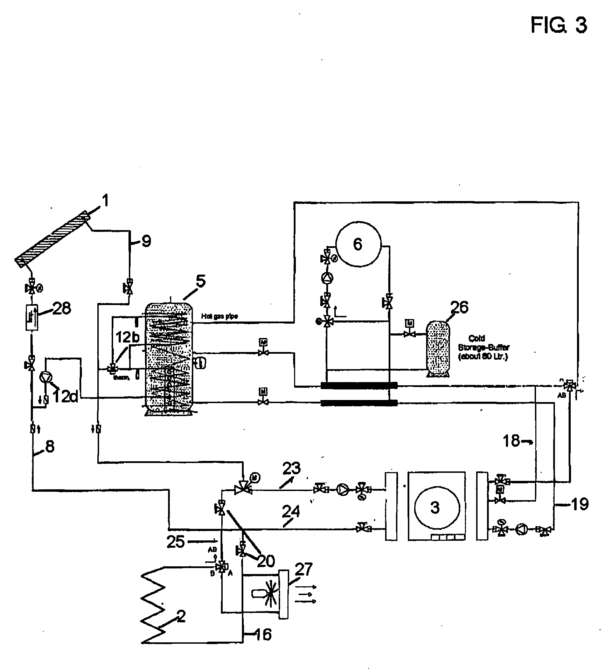

Fig. 3 zeigt eine beispielhafte Konfiguration der Heizanlage gemäß der zweiten Ausführungsform aus Fig. 2, die für wärmere Länder konzipiert ist. In dieser Konfiguration wird die Wärmepumpe 3 zeitweise, wenn ein Heizbetrieb nicht notwendig ist, umgekehrt zur Kühlung betrieben, wobei die dem Verbraucher 6 entzogene Wärme dem Wärmespeicher 2 zuführbar ist. Dieser kann als spezieller Solar-/Luftzaun (Luft-Sole-Absorber) ausgebildet sein. Weiterhin kann an dem Vor- und Rücklauf 25, 16 des Wärmespeichers 2 eine Kühlung 27, vorzugsweise mit einem Ventilator, zur Ableitung der Wärme angebracht sein. Außerdem ist in Fig. 3 der Pufferspeicher 5 kein Doppelmantelspeicher, sondern ein Speicher, der über Wärmetauscher geladen wird.

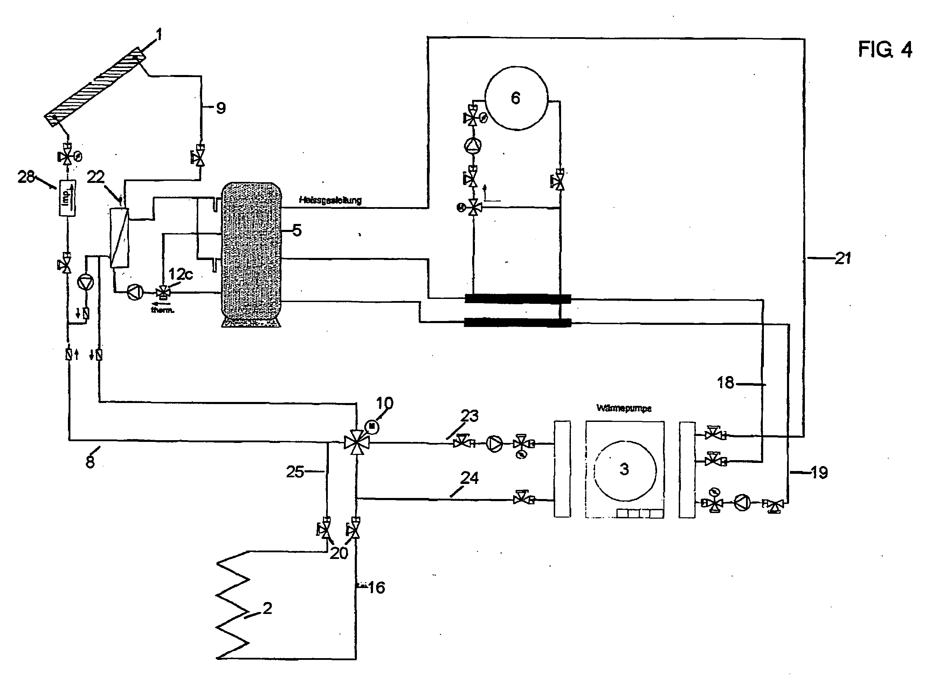

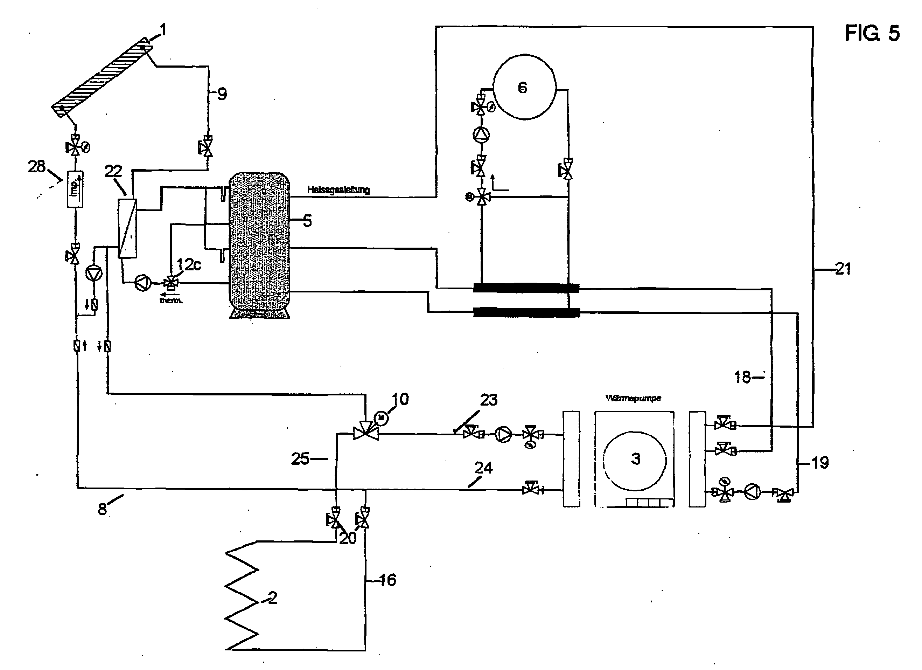

Fig. 4 und 5 sind ebenfalls beispielhafte Ausführungsformen der Heizanlagen aus Fig. 1 und 2. Unterschiedlich zu den Heizanlagen aus Fig. 1 und 2 sind die Heizanlagen aus Fig. 4 und 5 in der Weise, dass der Pufferspeicher 5 indirekt über einen Wärmetauscher 22 außerhalb und nicht über Wärmetauscher in dem Pufferspeicher 5 geladen wird.

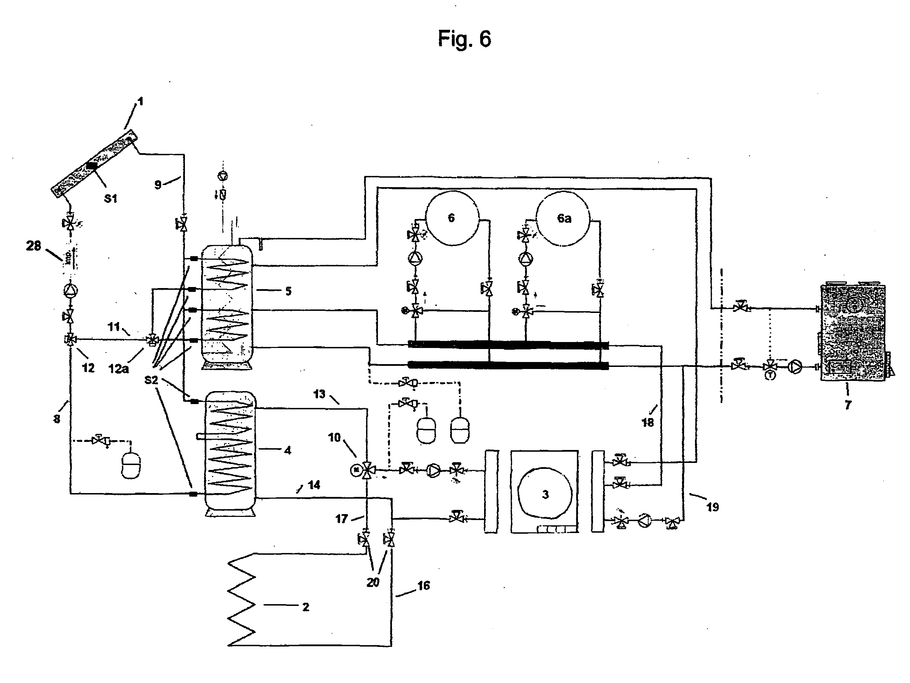

Fig. 6 zeigt eine weitere Ausführungsform der Erfindung, in der eine Wärmequelle 1, wiederum ein Sonnenkollektor, über einen Rücklauf 8 und einen Vorlauf 9 mit einem Vorwärmspeicher 4 in einen ersten Teilkreislauf eingebunden ist. In den ersten Kreislauf ist außerdem der Pufferspeicher 5, wiederum ein Speicher für die Warmwasserbereitung, die Unterstützung der Heizung und mit einer variablen Anzahl an Anschlüssen, über die eine variable Anzahl von Verbrauchern versorgt werden können, über die Leitung 11 und die Ventile 12, 12a eingebunden. Über die Verbindung mit dem Pufferspeicher 5 kann die von der Wärmequelle 1 gewonnene Energie direkt von den Verbrauchern 6, 6a genutzt werden. Die darüber hinaus gewonnene Energie wird über den in den Vorwärmspeicher 4 integrierten Wärmetauscher dem Vorwärmspeicher 4 zugeführt und dort gespeichert.

Der Vorwärmspeicher 4 liegt weiterhin über Leitungen 13, 14 und ein Dreiwege-Mischventil 10, parallel mit dem Wärmespeicher 2 und der Primärseite der Wärmepumpe 3 in einem zweiten Kreislauf. Die Leitung 13 verläuft von dem Vorwärmspeicher 4 zu dem Mischventil 10 und die Leitung 14 stellt die Rücklaufleitung in den Vorwärmspeicher 4 dar. Der Vorwärmspeicher 4 stellt somit neben der Funktion eines Speichers ein Verbindungsglied beider Kreisläufe dar, ohne beide Kreisläufe physisch miteinander zu verbinden. Vorteile dieser Verbindung liegen darin, dass die Wärmekapazität eines solchen Vorwärmspeichers 4 die des Wärmespeichers 2 übersteigen kann, der Vorwärmspeicher 4 in einer gewünschten Größe installiert und auch eine variable Anzahl an weiteren Wärmequellen zur Unterstützung der Wärmepumpe 3 installiert werden kann. In dem Kreislauf, in dem der Vorwärmspeicher 4, der Wärmespeicher 2 und die Wärmepumpe 3 enthalten sind, kann über das Mischventil 10 dem Wärmeträgermittel, das aus dem Ausgang 17 des Wärmespeichers 2 kommt, so viel Energie zugeführt werden, dass das Temperaturniveau an der Primärseite der Wärmepumpe 3 optimal ist.

Die Sekundärseite der Wärmepumpe 3 bildet mit den Leitungen 18, 19, die den Vor- und Rücklauf der Sekundärseite der Wärmpumpe darstellen, und dem Pufferspeicher 5 einen dritten Kreislauf, in dem vor Eintritt in den Pufferspeicher 5 der Verbraucher 6,6a installiert ist, was den Vorteil mit sich bringt, dass die Wärmepumpe 3 nicht getaktet werden muss, weil bei einem kurzzeitigem Nichtbedarf an Energie die Wärmepumpe nicht abgeschaltet wird, sondern die Energie in dem Pufferspeicher 5 gespeichert wird. Somit ist eine die Lebensdauer erhöhende Betriebsweise der Wärmepumpe 3 möglich.

Die Betriebsweise der in den Zeichnungen dargestellten Heizanlagen wird folgend erläutert:
In der Wärmequelle 1 ist ein Sensor S1, der zu einem gewünschten Zeitpunkt den Temperaturanstieg des Kollektors messen kann, vorhanden. Der Temperaturanstieg am Kollektor wird als Maß für die Entscheidung, ob der Kollektor fähig ist, in einen höheren Temperaturbereich zu kommen, verwendet. Ist der Kollektor fähig, in einen höheren Temperaturbereich zu kommen, wird die Zirkulation in dem ersten Teilkreislauf gedrosselt oder abgestellt, bis das gewünschte Temperaturniveau erreicht ist. An den einzelnen Speichern, Pufferspeicher 5 und Vorwärmspeicher 4, wobei in Fig. 1-5 nur der Speicher 5 installiert ist, sind jeweils an den Eingängen und Ausgängen Sensoren S2 installiert, über die die jeweilige Vorlauf- und Rücklauftemperatur des in den Wärmetauschern fließenden Wärmeträgermittels gemessen werden kann. Wie in den Figuren gezeigt, ist weiterhin ein Impulsgeber 28, mittels dessen der Durchfluss pro Zeiteinheit gemessen werden kann, installiert. Über diese messbare Temperaturdifferenz zwischen Eingang und Ausgang des jeweiligen Speichers 4 oder 5 und den gemessenen Durchfluss pro Zeiteinheit, kann die im Speicher enthaltene Wärmemenge berechnet und eine ökonomische Entscheidung darüber getroffen werden, welcher Speicher bei der vorliegenden Sonneneinstrahlung auf den Kollektor geladen werden soll.

In den Fig. 1 bis 5 sind diese Sensoren nicht gezeigt, können aber ohne Schwierigkeiten installiert werden. Außerdem kann die Anzahl an Speichern, wie auch schon in den Zeichnungen gezeigt, und das Speichervolumen beliebig variiert werden.

## Patentansprüche

1. Heizanlage, welche aufweist:
eine Wärmequelle (1),
einen Wärmespeicher (2),
eine Wärmepumpe (3), welche dem Wärmespeicher (2) über ihre Primärseite Wärme entnimmt und einem Verbraucher (6,6a) über ihre Sekundärseite zuführt,
einen Pufferspeicher (5), welchem von der Wärmequelle (1) Wärme zuführbar und aus welchem Wärme durch den Verbraucher entnehmbar ist,
wobei die Wärmequelle (1) mit einem Rücklauf (8) und einem Vorlauf (9) einen ersten Teilkreislauf bildet, in den der Pufferspeicher (5) über ein Ventil (12a, 12b) oder eine Weiche (22) bedarfsabhängig einbindbar ist, **dadurch gekennzeichnet, dass** die in dem ersten Teilkreislauf liegende Wärmequelle (1) parallel zu dem Wärmespeicher (2) liegend, über ein Mischventil (10) steuerbar, mit der Primärseite der Wärmepumpe (3) verbunden ist.

2. Heizanlage gemäß Anspruch 1, wobei ein Vorwärmspeicher (4) in dem ersten Teilkreislauf vorgesehen ist, der von der Wärmequelle (1) ladbar ist, und der Vorwärmspeicher (4) parallel zum Wärmespeicher (2) liegend, mit der Primärseite der Wärmpumpe (3) über ein Mischventil (10) steuerbar, verbunden ist.

3. Heizanlage gemäß Anspruch 2, wobei der Vorwärmspeicher (4) und der Wärmespeicher (2) mit der Primärseite der Wärmepumpe (3) einen zweiten Teilkreislauf bilden.

4. Heizanlage gemäß Anspruch 1, 2 oder 3, wobei die Sekundärseite der Wärmepumpe (3) mit ihrem Vorlauf (18) und ihrem Rücklauf (19) mit dem Pufferspeicher (5) und dem Verbraucher (6,6a) einen dritten Teilkreislauf bildet, wobei der Verbraucher (6,6a) im Vorlauf (18) der Wärmepumpe (3) vor dem Pufferspeicher (5) eingebunden ist.

5. Heizanlage gemäß Anspruch 3 oder 4, wobei in dem ersten Teilkreislauf ein anderes Wärmeträgermittel vorgesehen ist als in dem zweiten Teilkreislauf.

6. Heizanlage gemäß einem der Ansprüche 1 bis 5, wobei in den dritten Teilkreislauf auf der Sekundärseite der Wärmepumpe (3) ein konventioneller Energieerzeuger eingebunden ist.

7. Heizanlage gemäß einem der vorhergehenden Ansprüche, wobei das Mischventil (10) ein Dreiwege-Mischventil ist.

8. Heizanlage gemäß einem der vorhergehenden Ansprüche, wobei das Mischventil (10) ein Vierwege-Mischventil ist.

9. Heizanlage gemäß einem der Ansprüche 1 bis 8, wobei in der Wärmequellen (1) ein Sensor (S1) installiert ist und an Ein- und Ausgängen der Speicher (4, 5) jeweils ein Sensor (S2) vorgesehen ist, mit denen die im jeweiligen Speicher gespeicherte Wärmemenge messbar ist.

10. Heizanlage gemäß Anspruch 9, wobei weiterhin ein Impulsgeber (28) installiert ist, mittels dessen der Durchfluss pro Zeiteinheit durch die Wärmequelle (1) und somit durch den versorgten Speicher (4, 5) messbar ist.

11. Verfahren zum Betreiben einer Heizanlage gemäß Anspruch 9 oder 10, **dadurch gekennzeichnet, dass** den installierten Speichern Prioritätsränge zugeordnet werden, nach denen die Speicher von der Wärmequelle (1) geladen werden.

12. Verfahren gemäß Anspruch 11, wobei mit dem Sensor (S1) ein Temperaturanstieg in der Wärmequelle (1) bei geringem oder keinem Durchsatz durch die Wärmequelle (1) gemessen wird,
der gemessene Temperaturanstieg als Maß für ein erreichbares Temperaturniveau der Wärmequelle (1) dient, und
eine Entscheidung in Abhängigkeit der in den Speichern (4, 5) gespeicherten Wärme und deren Prioritätsrängen getroffen wird, welcher Speicher (4, 5) mit Wärme versorgt wird.

## Claims

1. Heating system, comprising:
a heat source (1),
a heat reservoir (2),
a heat pump (3) which withdraws heat from the heat reservoir (2) through its primary side and supplies it to a consumer (6, 6a) through its secondary side,
a buffer reservoir (5) which can be supplied with heat from the heat source (1) and from which heat can be withdrawn by the consumer,
the heat source (1) forming a first partial circuit with a return line (8) and a flow line (9) into which partial circuit the buffer reservoir (5) can be linked through a valve (12, 12b) or a switch (22) in a breath-responsive manner, **characterized in that** the heat source in the first primary circuit, disposed in parallel to the heat reservoir (2), is connected to the primary side of the heat pump (3) in a manner controllable through a mixing valve (10).

2. Heating system according to claim 1, wherein a pre-heat reservoir (4), chargeable by the heat source (1), is provided in the first primary circuit and the pre-heat reservoir (4) is connected to the primary side of the heating pump (3) in a manner controllable through a mixing valve (10), the pre-heat reservoir (4) being connected in parallel to the heat reservoir (2).

3. Heating system according to claim 2, wherein the pre-heat reservoir (4) and the heat reservoir (2) form a second partial circuit with the primary side of the heat pump (3).

4. Heating system according to claim 1, 2 or 3, wherein the secondary side of the heat pump (3) forms a third partial circuit with its feed line (18) and its return line (19) together with the buffer reservoir (5) and the consumer (6, 6a), the consumer (6, 6a) being integrated in the feed line (18) of the heat pump (3) upstream of the buffer reservoir (5).

5. Heating system according to claim 3 or 4, wherein in the first partial circuit a heat transfer medium is provided which is different from that in the second partial circuit.

6. Heating system according to any of the claims 1 to 5, wherein a conventional energy generator is provided in the third partial circuit at the secondary side of the heat pump (3).

7. Heating system according to any of the proceeding claims, wherein the mixing valve (10) is a three-way mixing valve.

8. Heating system according to any of the proceeding claims, wherein the mixing valve (10) is a four-way mixing valve.

9. Heating system according to any of the claims 1 to 8, wherein a sensor (S1) is mounted in the heat source (1) and a sensor (S2) is provided at each of the inputs and outputs of the reservoirs (4, 5) through which sensors the heat quantity in each reservoir can be measured.

10. Heating system according to claim 9, wherein a pulse generator (28) is installed by means of which the flow per unit of time through the heat source (1) and, thus, through the supplied reservoir (4, 5) can be measured.

11. A method for operating a heating system according to claim 9 or 10, **characterized in that** priority ranks are assigned to the installed reservoirs according to which ranks the reservoirs are charged by the heat source (1).

12. A method according to claim 11, wherein a temperature rise is measured in the heat source (1) when there is a small or no flow through the heat source (1),
the measured temperature rise serves as a measure for an achievable temperature level in the heat source (1), and
a decision on which reservoir (4, 5) is supplied with heat is made dependent on the heat stored in the reservoirs (4, 5) and the priority ranks thereof.

## Revendications

1. Installation de chauffage qui présente :
une source de chaleur (1),
un accumulateur de chaleur (2),
une pompe à chaleur (3) qui prend de la chaleur à l'accumulateur de chaleur (2) via son côté primaire et l'amène à un consommateur (6, 6a) via son côté secondaire,
un réservoir d'accumulation (5), auquel la source de chaleur (1) peut amener de la chaleur et duquel le consommateur peut retirer de la chaleur,
dans laquelle la source de chaleur (1) forme avec une conduite de retour (8) et une conduite d'alimentation (9) un premier circuit partiel, dans lequel le réservoir d'accumulation (5) peut être intégré selon le besoin via une vanne (12a, 12b) ou un dispositif d'aiguillage (22), **caractérisée en ce que** la source de chaleur (1) se trouvant dans le premier circuit partiel est reliée en parallèle de l'accumulateur de chaleur (2), commandable par une vanne mélangeuse (10), au côté primaire de la pompe à chaleur (3).

2. Installation de chauffage selon la revendication 1, dans laquelle un accumulateur de préchauffage (4) est prévu dans le premier circuit partiel, lequel peut être chargé par la source de chaleur (1), et l'accumulateur de préchauffage (4) est relié en parallèle de l'accumulateur de chaleur (2), commandable par une vanne mélangeuse (10), au côté primaire de la pompe à chaleur (3).

3. Installation de chauffage selon la revendication 2, dans laquelle l'accumulateur de préchauffage (4) et l'accumulateur de chaleur (2) forment un second circuit partiel avec le côté primaire de la pompe à chaleur (3).

4. Installation de chauffage selon la revendication 1, 2 ou 3, dans laquelle le côté secondaire de la pompe à chaleur (3) avec sa conduite d'alimentation (18) et sa conduite de retour (19) forme avec le réservoir d'accumulation (5) et le consommateur (6, 6a) un troisième circuit partiel, dans lequel le consommateur (6, 6a) est intégré dans la conduite d'alimentation (18) de la pompe à chaleur (3) avant le réservoir d'accumulation (5).

5. Installation de chauffage selon la revendication 3 ou 4, dans laquelle un autre agent caloporteur que celui du second circuit partiel est prévu dans le premier circuit partiel.

6. Installation de chauffage selon l'une quelconque des revendications 1 à 5, dans laquelle un générateur d'énergie conventionnel est intégré dans le troisième circuit partiel sur le côté secondaire de la pompe à chaleur (3).

7. Installation de chauffage selon l'une quelconque des revendications précédentes, dans laquelle la vanne mélangeuse (10) est une vanne mélangeuse à trois voies.

8. Installation de chauffage selon l'une quelconque des revendications précédentes, dans laquelle la vanne mélangeuse (10) est une vanne mélangeuse à quatre voies.

9. Installation de chauffage selon l'une quelconque des revendications 1 à 8, dans laquelle un capteur (S1) est installé dans la source de chaleur (1) et un capteur (S2) est respectivement prévu sur des entrées et sorties des accumulateurs (4, 5), avec lesquels la quantité de chaleur accumulée dans l'accumulateur respectif peut être mesurée.

10. Installation de chauffage selon la revendication 9, dans laquelle un générateur d'impulsions (28) est en outre installé, par lequel le débit par unité de temps de la source de chaleur (1) et ainsi de l'accumulateur alimenté (4, 5) peut être mesuré.

11. Procédé de fonctionnement d'une installation de chauffage selon la revendication 9 ou 10, **caractérisé en ce que** des rangs de priorité sont associés aux accumulateurs installés, selon lesquels les accumulateurs sont chargés par la source de chaleur (1).

12. Procédé selon la revendication 11, dans lequel avec le capteur (S1), une augmentation de température dans la source de chaleur (1) est mesurée en cas de faible ou d'aucun débit de la source de chaleur (1),
l'augmentation de température mesurée sert de mesure à un niveau de température atteignable de la source de chaleur (1), et
une décision, à savoir quel accumulateur (4, 5) est alimenté en chaleur, est prise selon la chaleur accumulée dans les accumulateurs (4, 5) et leurs rangs de priorité.
